# EUROPEAN PATENT SPECIFICATION

(11) **EP 2 858 414 B1**
(45) Date of publication and mention of the grant of the patent: **23.05.2018**
(21) Application number: 13805145.3
(22) Date of filing: 12.07.2013
(51) Int. Cl.: H04W 36/00, H04W 76/02, H04W 76/06, H04W 36/14

(54) **METHOD AND APPARATUS FOR IMPLEMENTING VOICE SERVICE FALLBACK**
VERFAHREN UND VORRICHTUNG ZUR DURCHFÜHRUNG EINES SPRACHDIENST-RÜCKFALLES
PROCÉDÉ ET APPAREIL POUR LA MISE EN OUVRE DE REPLI SUR SERVICE VOCAL

(30) Priority: 13.07.2012 CN 201210243082
(43) Date of publication of application: 08.04.2015
(73) Proprietor: ZTE Corporation, Shenzhen, Guangdong 518057 (CN)
(72) Inventor: ZHANG, Rong, Shenzhen Guangdong518057 (CN); SUN, Wei, Shenzhen Guangdong 518057 (CN)
(74) Representative: Modiano, Micaela Nadia
(86) International application number: PCT/CN2013/079316
(87) International publication number: WO 2013/185669

(56) References cited:
- WO-A1-2010/051873
- WO-A1-2011/099530
- WO-A2-2011/156264
- CN-A- 101 472 310
- CN-A- 101 483 898
- CN-A- 101 854 600
- US-A1- 2012 064 884
- US-A1- 2012 064 885
- VODAFONE: "CSFB MRO-USE CASE", 3GPP DRAFT; R3-112761, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San-Francisco, USA; 20111114 - 20111118, 4 November 2011 (2011-11-04), XP050566002, [retrieved on 2011-11-04]
- 3GPP: "3rd Generation Partnership Project; Technical Specification Group Services and System Aspects; Circuit Switched (CS) fallback in Evolved Packet System (EPS); Stage 2 (Release 11)", 3GPP DRAFT; 23272-B10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 6 July 2012 (2012-07-06), XP050625322, [retrieved on 2012-07-06]

## Description

### Technical Field

The present invention relates to the field of mobile communication technologies, and more particularly, to a method and an apparatus for implementing circuit switched fallback.

### Background of the Invention

The LTE (Long Term Evolved) network does not support the voice service in some cases (for example, the LTE network does not support the VoIMS), therefore the LTE network falls a UE (User Equipment) back to the 1xRTT (1x Radio Telecommunication Technology) network which supports the voice service when the UE needs to initiate a voice service, which is called an eCSFB (Enhanced Circuit Switched Fallback) process. If the UE has the PS (Packet Switched) service at the same time, an eNodeB (Evolved Node B) switches the UE's PS service to a HRPD (High Rate Packet Data) network simultaneously according to the strategy, and this process is known as eCSFB concurrent PS handover process.

In the eCSFB process, the processing failure of the 1xRTT network or the MME may cause the eCSFB process failed, in the treatment for this in the related art, the eNodeB sends a downlink transfer message to the UE, and does not do any treatment for this failure.

In the eCSFB concurrent PS handover process, the processing failure of the HRPD network or the 1xRTT network or the MME causes the eCSFB concurrent PS handover to the HRPD process failed, and in this failure case, the eNodeB does not do any treatment for this failure either.

Comprehensively speaking, the treatment of the eNodeB in the related art is not to make further treatment on the failure, and only to transparently transmit a failure indication to the UE. The defects of such a treatment are that the time for the UE initiating a CS call is lengthened, and if there is also the PS service, the duration of the PS service interruption is prolonged, the data gap is evident, and the user experience is degraded.

A method and an apparatus for implementing circuit switched fallback is known from WO2011/099530A1.

### Summary of the Invention

The embodiment of the present invention provides a method and an apparatus for implementing circuit switched fallback as defined in the independent claims 1 and 6, to make users still able to perform CS and PS services when a processing failure occurs on the network side in a circuit switched fallback process. Further advantageous aspects of the invention are set out in the dependent Embodiments not covered by the claims are to be regarded merely as examples. A method for implementing circuit switched fallback comprises:
in an enhanced circuit switched fallback (eCSFB) process, when learning that a processing failure occurs on a network side, an Evolved Node B (eNodeB) sending an indication message to a user equipment to indicate the user equipment to redirect to a target cell.

Preferably, sending an indication message to a user equipment to indicate the user equipment to redirect to a target cell comprises:
when a processing failure occurs on a network side in a process of a user equipment falling back from an evolved universal terrestrial radio access network (E-UTRAN) to a 1x radio telecommunication technology (IxRTT) network, the eNodeB sending a radio resource control (RRC) connection release message to the user equipment and carrying redirection information of the target 1xRTT network cell in the RRC connection release message to indicate the user equipment to redirect to the target 1xRTT network cell.

Preferably, sending an indication message to a user equipment to indicate the user equipment to redirect to the target cell comprises:
when processing failures occur on the network side in both a process of the user equipment falling back from the E-UTRAN to the 1xRTT network and a concurrent packet switched (PS) handover process, the eNodeB sending a RRC connection release message to the user equipment, and carrying redirection information of the target 1xRTT network cell and the target high-rate packet data (HRPD) network cell into the RRC connection release message to indicate the user equipment to redirect the voice service to the target 1xRTT network cell and the PS service to the target HRPD network cell.

Preferably, sending an indication message to a user equipment to indicate the user equipment to redirect to the target cell comprises:
when a processing failure occurs on the network side in the process of a user equipment falling back from the E-UTRAN to the 1xRTT network, while no processing failure occurs on the network side in the concurrent PS handover process, the eNodeB sending the user equipment a Mobility From EUTRA Command (handover command) message, and carrying redirection information of the target 1xRTT network cell and information of the HRPD network into the Mobility From EUTRA Command message to indicate the user equipment to redirect the voice service to the target 1xRTT network cell and to continue the PS service in the current HRPD network.

Preferably, sending an indication message to a user equipment to indicate the user equipment to redirect to the target cell comprises:
when no processing failure occurs on the network side in the process of the user equipment falling back from the E-UTRAN to the 1xRTT network, while a processing failure occurs on the network side in the concurrent PS handover process, the eNodeB sending the user equipment a Mobility From EUTRA Command message, and carrying the redirection information of the target HRPD network cell and the information of the 1xRTT network into the Mobility From EUTRA Command message to indicate the user equipment to redirect the PS service to the target HRPD network cell and to continue the voice service in the current 1xRTT network.

An apparatus for implementing circuit switched fallback comprises: a judging unit and a failure processing unit, wherein:
the judging unit is configured to: judge whether a processing failure occurs on the network side or not in an enhanced circuit switched fallback (eCSFB) process;
the failure processing unit is configured to: send an indication message to a user equipment to indicate the user equipment to redirect to a target cell when a processing failure occurs on the network side.

Preferably, the failure processing unit is configured to: when a processing failure occurs on the network side in the process of the user equipment falling back from the evolved universal terrestrial radio access network (E-UTRAN) to the 1x radio telecommunication technology (IxRTT) network, send a radio resource control (RRC) connection release message to the user equipment, and carry redirection message of the target cell 1xRTT network cell in the RRC connection release message to indicate the user equipment to redirect to the target 1xRTT network cell.

Preferably, the failure processing unit is configured to: when processing failures occur on the network side in both the process of a user equipment falling back from the E-UTRAN to the 1xRTT network and the concurrent packet switched (PS) handover process, send a RRC connection release message to the user equipment, and carry redirection information of the target 1xRTT network cell and the target High Rate Packet Data (HRPD) network cell in the RRC connection release message, to indicate the user equipment to redirect the voice service to the target 1xRTT network cell and the PS service to the target HRPD network cell.

Preferably, the failure processing unit is configured to: when a processing failure occurs on the network side in the process of the user equipment falling back from the E-UTRAN to the 1xRTT network, while no processing failure occurs on the network side in the concurrent PS handover process, send a Mobility From EUTRA Command (handover command) message to the user equipment, and carry the redirection information of the target 1xRTT network cell and the information of the HRPD network into the Mobility From EUTRA Command message to indicate the user equipment to redirect the voice service to the target 1xRTT network cell and to continue the PS service in the current HRPD network.

Preferably, the failure processing unit is configured to: when no processing failure occurs on the network side in the process of the user equipment falling back from the E-UTRAN to the 1xRTT network while a processing failure occurs on the network side in the concurrent PS handover process, send a Mobility From EUTRA Command message to the user equipment, and carry the redirection information of the target HRPD network cell and the information of the 1xRTT network in the Mobility From EUTRA Command message to indicate the user equipment to redirect the PS service to the target HRPD network cell and to continue the voice service in the current 1xRTT network.

In summary, in the scenario where a processing failure occurs on the network side, the embodiment of the present invention redirects the UE to the target cell in the 1xRTT (the eCSFB process) or the target cells in the 1xRTT and the HRPD network (the eCSFB concurrent PS handover process) through the redirection mode, so that the UE can initiate the voice service at the highest speed, meanwhile, the data service gap duration is shortened, the user experience is improved, and the eCSFB or the eCSFB concurrent PS handover process is optimized.

### Brief Description of the Drawings

FIG. 1 is a flow chart of the first embodiment of a method for implementing circuit switched fallback in accordance with the present invention;
FIG. 2 is a flow chart of the second embodiment of a method for implementing circuit switched fallback in accordance with the present invention;
FIG. 3 is a flowchart of the third embodiment of a method for implementing circuit switched fallback in accordance with the present invention;
FIG. 4 is a flow chart of the fourth embodiment of a method for implementing circuit switched fallback in accordance with the present invention;
FIG. 5 is an architectural diagram of an apparatus for implementing circuit switched fallback in accordance with an embodiment of the present invention.

### Preferred Embodiments of the Invention

The present embodiment indicates the UE to redirect to the target cell by sending an indication message to the UE when a processing failure occurs on the network side, and redirect to the targetlxRTT network cell in an eCSFB process, and to the target 1xRTT network cell and/or the target HRPD network cell in the eCSFB concurrent PS handover process.

Hereinafter in conjunction with the accompanying drawings, the embodiments of the present invention will be described in detail. It should be noted that, in the case of no conflict, the embodiments and features in the embodiments of the present application may be arbitrarily combined with each other.

### The first embodiment

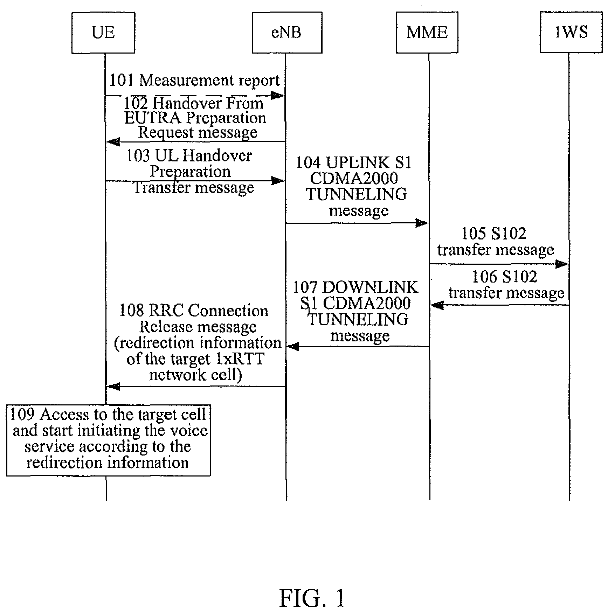

FIG. 1 shows a method for implementing circuit switched fallback from the E-UTRAN to the 1xRTT network in the present embodiment, comprising:
101: in a measurement based eCSFB process, the UE reports a measurement report to the eNodeB.

This step is optional, and if it is a blind eCSFB process, this step does not exist.
102: the eNodeB decides to initiate an E-UTRAN to 1xRTT network eCSFB process to the UE, and sends the UE a Handover From EUTRA Preparation Request message.
103: the UE initiates a call according to the eNodeB's indication and sends an UL Handover Preparation Transfer message to the eNodeB.
104: the eNodeB transparently sends the UE's UL Handover Preparation Transfer message, sends an UPLINK S1 CDMA2000 TUNNELING message to the MME, and starts a timer to wait for the DL S1 CDMA2000 TUNNELING Message from the MME; if the MME's DL S1 CDMA2000 tunneling message is not received when the timer expires, directly proceed to step 108.
105: the MME transparently sends the eNodeB's UPLINK S1 CDMA2000 TUNNELING message, and sends a S102 transfer message to the IWS (Interworking solution) node.
106: when the processing of the IWS node fails, carry the processing failure information in the S102 transfer message and send the S102 transfer message to the MME.
107: the MME transparently sends the S102 transfer message and sends the DOWNLINK S1 CDMA2000 TUNNELING message including the resources of the 1xRTT network and the called ringing response to the eNodeB.
108: the eNodeB learns that the eCSFB fails through the DOWNLINK S1 CDMA2000 TUNNELING message or the timer expired message, and in order to make the UE initiate the voice service as soon as possible, the eNodeB sends a RRC (Radio Resource Control) connection release message carrying the redirection information of the target 1xRTT network cell to quickly redirect the UE to the target 1xRTT network cell.

When any one of the abovementioned steps 104 to 107 fails, the eNodeB redirects the UE to the target 1xRTT network cell.
109: the UE accesses to the target cell and starts initiating the voice service according to the redirection information.

### The second embodiment

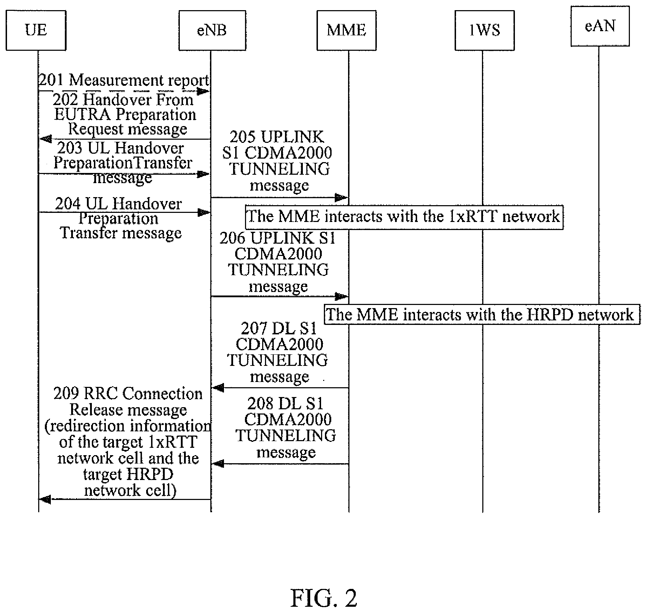

FIG. 2 shows a method for implementing circuit switched fallback in a E-UTRAN to 1xRTT network eCSFB concurrent PS handover process in accordance with the present embodiment, comprising:
201: in a measurement based eCSFB process, the UE reports a measurement report to the eNodeB.

This step is optional, and if it is a blind eCSFB process, this step does not exist.
202: the eNodeB decides to initiate an E-UTRAN to 1xRTT network eCSFB concurrent PS handover process to the UE, and sends the UE a Handover From EUTRA Preparation Request message.
203: the UE initiates a call message to the 1xRTT network according to the eNodeB's indication in the Handover From EUTRA Preparation Request message, and sends an UL Handover Preparation Transfer message to the eNodeB.
204: the UE initiates a handover request to the HRPD network in accordance with the eNodeB's indication in the Handover From EUTRA Preparation Request message, and sends an UL Handover Preparation Transfer message to the eNodeB.
205: the eNodeB receives the UL Handover Preparation Transfer message sent by the UE to the 1xRTT network, transparently transmits the message, sends an UPLINK S1 CDMA2000 TUNNELING message to the MME, and starts a timer to wait for the DL S1 CDMA 2000 TUNNELING message from the MME.
206: the eNodeB receives the UL Handover Preparation Transfer message sent by the UE to the HRPD network, transparently transmits the message, sends the UPLINK S1 CDMA2000 TUNNELING message to the MME, and starts a timer to wait for the DL S1 CDMA2000 TUNNELING message from the MME.
207: the MME interacts with the 1xRTT network, and when the 1xRTT network returns a failure message, a failure indication is carried in the DL S1 CDMA2000 TUNNELING message sent by the MME to the eNodeB;.
208: the MME interacts with the HRPD network, and when the HRPD network returns a failure message, the MME sends a DL S1 CDMA2000 TUNNELING message carrying a failure indication to the eNodeB.
209: the eNodeB receives both of the DL S1 CDMA2000 TUNNELING messages from the MME, learns that the handover to the HRPD network and the eCSFB to the 1xRTT network fail, sends a RRC Connection Release message carrying the redirection information of the target HRPD network cell and the target 1xRTT network cell to the UE to redirect the UE's CS service to the target 1xRTT network cell and also the UE's PS service to the target HRPD network cell, so that the UE can initiate the CS service faster and also continue the PS service to the maximum extent.

### The third embodiment

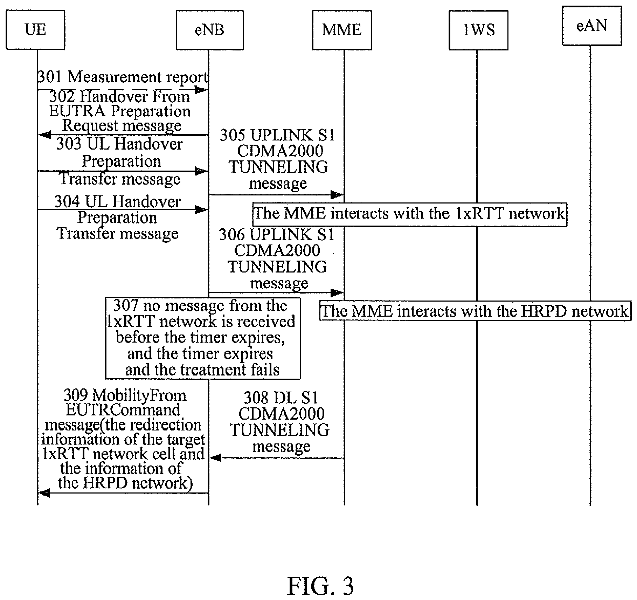

FIG. 3 shows a method for implementing circuit switched fallback in an E-UTRAN to 1xRTT network eCSFB concurrent PS handover process in accordance with the present embodiment, comprising:
301: the UE reports a measurement report to the eNodeB in a measurement based eCSFB process.

This step is optional, and if it is a blind eCSFB process, this step does not exist.
302: the eNodeB decides to initiate an E-UTRAN to 1xRTT network eCSFB concurrent PS handover process to the UE, and sends the UE a Handover From EUTRA Preparation Request message.
303: the UE initiates a call message to the 1xRTT network according to the eNodeB's indication in the Handover From EUTRA Preparation Request message, and sends an UL Handover Preparation Transfer message to the eNodeB.
304: the UE initiates a handover request to the HRPD network in accordance with the eNodeB's indication in the Handover From EUTRA Preparation Request message, and sends an UL Handover Preparation Transfer message to the eNodeB.
305: the eNodeB receives the UL Handover Preparation Transfer message sent by the UE to the 1xRTT network, transparently transmits the message, sends an UPLINK S1 CDMA2000 TUNNELING message to the MME, and starts a timer to wait for the DL S1 CDMA 2000 TUNNELING message from the MME.
306: the eNodeB receives the UL Handover Preparation Transfer message sent by the UE to the HRPD network, transparently transmits the message, sends an UPLINK S1 CDMA2000 TUNNELING message to the MME, and starts a timer to wait for the DL S1 CDMA2000 TUNNELING message from the MME.
307: the eNodeB does not receive the DL S1 CDMA2000 TUNNELING message sent by the MME of the 1xRTT network before the timer expires.
308: the MME interacts with the HRPD network, and if the HRPD network returns a success message, the MME sends a DL S1 CDMA2000 TUNNELING message carrying a success indication to the eNodeB.
309: the eNodeB receives the HRPD network related DL S1 CDMA2000 TUNNELING message but not the 1xRTT network related S1 CDMA2000 TUNNELING message from the MME before the timer expires, sends a MobilityFromEUTRCommand message carrying the information from the HRPD network to the UE, meanwhile contains the redirection information of the target 1xRTT network cell into the redirection information so as to redirect the UE's CS service to the target 1xRTT network cell, meanwhile the UE's PS service continues in the HRPD network cell, so that the UE can initiate the CS service faster, while the PS service can continue as well.

The redirection information of the target 1xRTT network cell comes from the measurement report reported by the UE in step 301.

### The fourth embodiment

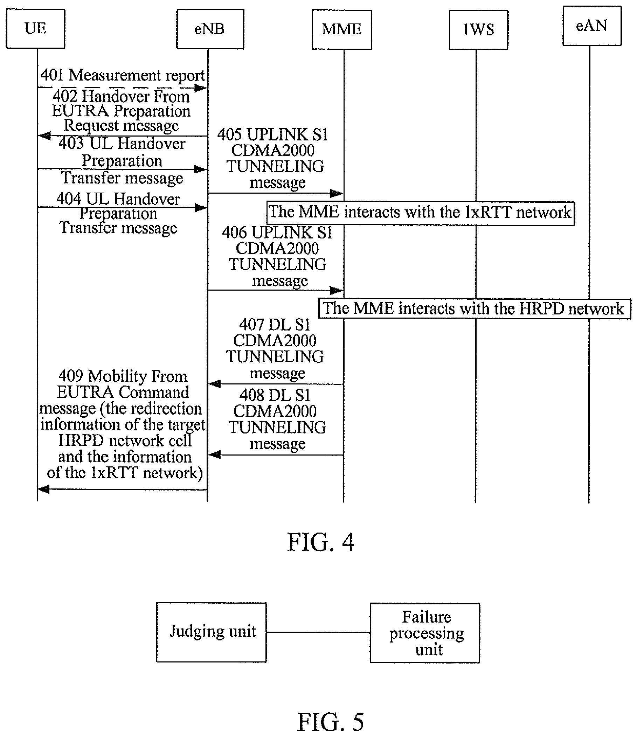

FIG. 4 shows a method for implementing circuit switched fallback in an E-UTRAN to 1xRTT network eCSFB concurrent PS handover process in accordance with the present embodiment, comprising:
401: in a measurement based eCSFB process, the UE reports a measurement report to the eNodeB.

This step is optional, and if it is a blind eCSFB process, this step does not exist.
402: the eNodeB decides to initiate an E-UTRAN to 1XRTT network eCSFB concurrent PS handover process to the UE, and sends a Handover From EUTRA Preparation Request message to the UE.
403: the UE initiates a call message to the 1xRTT network in accordance with the eNodeB's indication in the Handover From EUTRA Preparation Request message and sends an UL Handover Preparation Transfer message to the eNodeB.
404: the UE initiates a handover request to the HRPD network in accordance with the eNodeB's indication in the Handover From EUTRA Preparation Request message, and sends an UL Handover Preparation Transfer message to the eNodeB.
405: the eNodeB receives the UL Handover Preparation Request message sent by the UE to the 1xRTT network, transparently transmits the message, sends an UPLINK S1 CDMA2000 TUNNELING message to the MME, and starts a timer to wait for the DL S1 CDMA 2000 TUNNELING message from the MME.
406: the eNodeB receives the UL Handover Preparation Request message sent by the UE to the HRPD network, transparently transmits the message, sends an UPLINK S1 CDMA2000 TUNNELING message to the MME, and starts a timer to wait for the DL S1 CDMA2000 TUNNELING message from the MME.
407: the eNodeB receives the 1xRTT network related DL S1 CDMA2000 TUNNELING message sent by the MME, and the message indicates that the eCSFB to the 1xRTT network is successful.
408: the MME interacts with the HRPD network, and if the HRPD network returns a failure message, the MME sends a DL S1 CDMA2000 TUNNELING message carrying a failure indication to the eNodeB; or the eNodeB does not receive the DL S1 CDMA2000 TUNNELING message sent by the MME before the timer expires.
409: the eNode sends a Mobility From EUTRA Command message carrying information of the 1xRTT network to the UE, meanwhile includes the redirection information of the target HRPD network cell into the redirection information to redirect the UE's PS service to the target HPRD network cell, meanwhile, continue the UE's CS service in the 1xRTT network, so that the UE can initiate the CS service faster, while the PS service can continue as well.

The redirection information of the target HRPD network cell comes from the measurement report reported by the UE in step 101 or the information of the HRPD network cell with the same coverage configured in the background.

As shown in FIG. 5, the present embodiment also provides an apparatus for implementing voice service fallback, comprising: a judging unit and a failure processing unit, wherein:
the judging unit is configured to: judge whether a processing failure occurs on the network side or not in an enhanced call service fallback (eCSFB) process;
the failure processing unit is configured to: send an indication message to a user equipment to indicate the user equipment to redirect to a target cell when a processing failure occurs on the network side.

The failure processing unit is configured to: when a processing failure occurs on the network side in the process of a user equipment falling back from the evolved universal terrestrial radio access network (E-UTRAN) to the 1x radio telecommunication technology (1xRTT) network, send a radio resource control (RRC) connection release message to the user equipment, and carry redirection message of the target cell 1xRTT network cell in the RRC connection release message to indicate the user equipment to redirect to the target 1xRTT network cell.

The failure processing unit is configured to: when a processing failure occurs on the network side in both the process of a user equipment falling back from the E-UTRAN to the 1xRTT network and the concurrent packet switched (PS) handover process, send a RRC connection release message to the user equipment, and carry redirection information of the target 1xRTT network cell and the target High Rate Packet Data (HRPD) network cell in the RRC connection release message to indicate the user equipment to redirect the voice service to the target 1xRTT network cell and the PS service to the target HRPD network cell.

The failure processing unit is configured to: when a processing failure occurs on the network side in the process of the user equipment falling back from the E-UTRAN to the 1xRTT network, while no processing failure occurs on the network side in the concurrent PS handover process, send a Mobility From EUTRA Command (handover command) message to the user equipment, and carry the redirection information of the target 1xRTT network cell and the information of the HRPD network into the Mobility From EUTRA Command message to indicate the user equipment to redirect the voice service to the target 1xRTT network cell and continue the PS service in the current HRPD network.

The failure processing unit is configured to: when no processing failure occurs on the network side in the process of the user equipment falling back from the E-UTRAN to the 1xRTT network while a processing failure occurs on the network side in the concurrent PS handover process, send a Mobility From EUTRA Command message to the user equipment, and carry the redirection information of the target HRPD network cell and the information of the 1xRTT network into the Mobility From EUTRA Command message to indicate the user equipment to redirect the PS service to the target HRPD network cell and continue the voice service in the current 1xRTT network.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

Obviously, those skilled in the art can make various modifications and variations of the embodiments of the present invention without departing from the scope of the attached claims. Thus, if these modifications and variations of the embodiments of the present invention are within the scope of the attached claims, the present invention is also intended to include these modifications and variations.

### Industrial Applicability

The embodiment of the present invention makes the UE initiate a voice service at the highest speed, meanwhile, shortens the data service gap duration, improves the user experience, and optimize the eCSFB or the eCSFB concurrent PS handover process.

## Claims

1. A method for implementing circuit switched fallback, comprising:
in an enhanced circuit switched fallback, eCSFB, process, an Evolved Node B, eNodeB, sending an indication message to a user equipment, UE, to indicate the UE to redirect to a target cell when the eNodeB learns that a processing failure occurs on a network side;
wherein eCSFB process means that a Long Term Evolution, LTE, network falls the UE back to a 1x Radio Telecommunication Technology, 1xRTT, network which supports a voice service when the UE initiates the voice service;
wherein the processing failure occurs on a network side comprises a processing failure of the 1xRTT network or a processing failure of a MME in the eCSFB process, or a processing failure of a High Rate Packet Data, HRPD, network or of the 1xRTT network or of the MME in a eCSFB concurrent PS handover process of the UE.

2. The method of claim 1, wherein, the sending an indication message to a UE to indicate the UE to redirect to a target cell comprises:
when the eNodeB learns that a processing failure occurs on the network side in a process of the UE falling back from an evolved universal terrestrial radio access network, E-UTRAN, to a 1xRTT network, the eNodeB sending (108) a radio resource control, RRC, connection release message to the UE and carrying redirection information of a target 1xRTT network cell into the RRC connection release message to indicate the UE to redirect to the target 1xRTT network cell.

3. The method of claim 1, wherein, the sending an indication message to a UE to indicate the UE to redirect to the target cell comprises:
when the eNodeB learns that processing failures occur on the network side in a process of the UE falling back from an E-UTRAN to a 1xRTT network and a concurrent packet switched, PS, handover process, the eNodeB sending (209) a RRC connection release message to the UE, and carrying redirection information of a target 1xRTT network cell and a target high-rate packet data, HRPD, network cell into the RRC connection release message to indicate the UE to redirect a voice service to the target 1xRTT network cell and the PS service to the target HRPD network cell.

4. The method of claim 1, wherein, the sending an indication message to a UE to indicate the UE to redirect to the target cell comprises:
when the eNodeB learns that a processing failure occurs on the network side in the process of the UE falling back from an E-UTRAN to a 1xRTT network, while no processing failure occurs on the network side in a concurrent PS handover process, the eNodeB sending (309) the UE a Mobility From EUTRA Command message, and carrying redirection information of a target 1xRTT network cell and information of a HRPD network into the Mobility From EUTRA Command message to indicate the UE to redirect a voice service to the target 1xRTT network cell and to continue the PS service in a current HRPD network.

5. The method of claim 1, wherein, the sending an indication message to a UE to indicate the UE to redirect to the target cell comprises:
when the eNodeB learns that no processing failure occurs on the network side in the process of the UE falling back from the E-UTRAN to the 1xRTT network, while a processing failure occurs on the network side in a concurrent PS handover process, the eNodeB sending (409) the UE a Mobility From EUTRA Command message, and carrying redirection information of a target HRPD network cell and information of a 1xRTT network into the Mobility From EUTRA Command message to indicate the UE to redirect PS service to the target HRPD network cell and to continue a voice service in a current 1xRTT network.

6. An apparatus for implementing circuit switched fallback, wherein the apparatus is located in an Evolved Node B, eNodeB, and comprises: a judging unit and a failure processing unit, and wherein:
the judging unit is configured to: judge whether a processing failure occurs on a network side or not in an enhanced circuit switched fallback, eCSFB, process; and
the failure processing unit is configured to: send an indication message to a UE to indicate the UE to redirect to a target cell when said processing failure occurs on the network side;
wherein eCSFB process means that a Long Term Evolution, LTE, network falls the UE back to a 1x Radio Telecommunication Technology, 1xRTT, network which supports a voice service when the UE initiates the voice service;
wherein the processing failure occurs on a network side comprises a processing failure of the 1xRTT network or a processing failure of a MME in the eCSFB process, or a processing failure of a High Rate Packet Data, HRPD, network or of the 1xRTT network or of the MME in a eCSFB concurrent, packet switched, PS, handover process of the UE.

7. The apparatus of claim 6, wherein:
the failure processing unit is configured to: when a processing failure occurs on the network side in the process of the UE falling back from an evolved universal terrestrial radio access network, E-UTRAN, to a 1xRTT, network, send a radio resource control, RRC, connection release message to the UE, and carry redirection message of a target cell 1xRTT network cell in the RRC connection release message to indicate the UE to redirect to the target 1xRTT network cell.

8. The apparatus of claim 6, wherein:
the failure processing unit is configured to: when processing failures occur on the network side in a process of the UE falling back from an E-UTRAN to a 1xRTT network and a concurrent PS handover process, send a RRC connection release message to the UE, and carry redirection information of a target 1xRTT network cell and a target HRPD, network cell in the RRC connection release message, to indicate the UE to redirect a voice service to the target 1xRTT network cell and a PS service to the target HRPD network cell.

9. The apparatus of claim 6, wherein:
the failure processing unit is configured to: when a processing failure occurs on the network side in the process of the UE falling back from an E-UTRAN to a 1xRTT network, while no processing failure occurs on the network side in a concurrent PS handover process, send a Mobility From EUTRA Command message to the UE, and carry a redirection information of the target 1xRTT network cell and information of a HRPD network into the Mobility From EUTRA Command message to indicate the UE to redirect a voice service to the target 1xRTT network cell and to continue the PS service in a current HRPD network.

10. The apparatus of claim 6, wherein:
the failure processing unit is configured to: when no processing failure occurs on the network side in a process of the UE falling back from an E-UTRAN to a 1xRTT network while a processing failure occurs on a network side in a concurrent PS handover process, send a Mobility From EUTRA Command message to the UE, and carry redirection information of a target HRPD network cell and information of the 1xRTT network in the Mobility From EUTRA Command message to indicate the UE to redirect the PS service to the target HRPD network cell and to continue a voice service in a current 1xRTT network.

## Patentansprüche

1. Ein Verfahren zur Durchführung eines leitungsvermittelten Rückfalls, das Folgendes umfasst:
in einem Verfahren zu verbessertem leitungsvermittelten Rückfall, enhanced circuit switched fallback - eCSFB -, das Senden einer Anzeigenachricht durch einen Evolved Node B, eNodeB, an ein Teilnehmergerät, user equipment - UE -, um das UE zur Weiterleitung an eine Zielzelle aufzufordern, wenn der eNodeB erfährt, dass ein Verarbeitungsfehler auf einer Netzwerkseite auftritt;
wobei "eCSFB-Verfahren" bedeutet, dass ein Long Term Evolution, - LTE -, Netzwerk das UE an ein 1 x Radio Telecommunication Technology, 1xRTT, Netzwerk weiterleitet, das einen Telefondienst unterstützt, wenn das UE den Telefondienst initialisiert;
wobei der Verarbeitungsfehler auf einer Netzwerkseite auftritt, einen Verarbeitungsfehler des 1xRTT-Netzwerks oder einen Verarbeitungsfehler eines MMEs im eCSFB-Verfahren oder einen Verarbeitungsfehler eines High Rate Packet Data, HRPD, Netzwerks oder des 1xRTT-Netzwerks oder des MMEs in einem gleichzeitigen eCSFB-PS-Übergabeverfahren des UEs umfasst.

2. Das Verfahren gemäß Anspruch 1, worin das Senden einer Anzeigenachricht an ein UE, um das UE aufzufordern, eine Weiterleitung an eine Zielzelle vorzunehmen, Folgendes umfasst:
wenn der eNodeB erfährt, dass ein Verarbeitungsfehler auf der Netzwerkseite in einem Prozess des Zurückfallens des UEs von einem Evolved Universal Terrestrial Radio Access Network, E-UTRAN, auf ein 1xRTT-Netzwerk auftritt, das Senden (108), durch den eNodeB, einer Radio Resource Control, RRC, Verbindungsabbaunachricht an das UE, und das Übertragen von Weiterleitungsinformationen einer Ziel-lxRTT-Netzwerkzelle in die RRC-Verbindungsabbaunachricht, um das UE aufzufordern, an die Ziel-lxRTT-Netzwerkzelle weiterzuleiten.

3. Das Verfahren gemäß Anspruch 1, wobei das Senden einer Anzeigenachricht an ein UE, um das UE aufzufordern, eine Weiterleitung an die Zielzelle vorzunehmen, Folgendes umfasst:
wenn der eNodeB erfährt, dass Verarbeitungsfehler auf der Netzwerkseite in einem Prozess des Zurückfallens des UEs von einem E-UTRAN auf ein 1xRTT-Netzwerk und ein gleichzeitiges paketvermitteltes, packet switched - PS -, Übergabeverfahren auftreten, das Senden (209), durch den eNodeB, einer RRC-Verbindungsabbaunachricht an das UE und das Übertragen von Weiterleitungsinformationen einer Ziel-lxRTT-Netzwerkzelle und einer Ziel-High-Rate Packet Data, HRPD, Netzwerkzelle in die RRC-Verbindungsabbaunachricht, um das UE aufzufordern, einen Telefondienst an die Ziel-lxRTT-Netzwerkzelle und den PS-Dienst an die Ziel-HRPD-Netzwerkzelle weiterzuleiten.

4. Das Verfahren gemäß Anspruch 1, wobei das Senden einer Anzeigenachricht an ein UE, um das UE aufzufordern, eine Weiterleitung an die Zielzelle vorzunehmen, Folgendes umfasst:
wenn der eNodeB erfährt, dass ein Verarbeitungsfehler auf der Netzwerkseite in dem Prozess des Zurückfallens des UEs von einem E-UTRAN auf ein 1xRTT-Netzwerk auftritt, während kein Verarbeitungsfehler auf der Netzwerkseite in einem gleichzeitigen PS-Übergabeverfahren auftritt, das Senden (309), durch den eNodeB, einer Mobility from EUTRA Command-Nachricht an das UE und das Übertragen von Weiterleitungsinformationen einer Ziel-lxRTT-Netzwerkzelle und Informationen eines HRPD-Netzwerks in die Mobility From EUTRA Command-Nachricht, um das UE aufzufordern, einen Telefondienst an die Ziel-lxRTT-Netzwerkzelle weiterzuleiten und den PS-Dienst in einem aktuellen HRPD-Netzwerk fortzusetzen.

5. Das Verfahren gemäß Anspruch 1, wobei das Senden einer Anzeigenachricht an ein UE, um das UE aufzufordern, eine Weiterleitung an die Zielzelle vorzunehmen, Folgendes umfasst:
wenn der eNodeB erfährt, dass kein Verarbeitungsfehler auf der Netzwerkseite in dem Prozess des Zurückfallens des UEs vom E-UTRAN auf das 1xRTT-Netzwerk auftritt, während jedoch ein Verarbeitungsfehler auf der Netzwerkseite in einem gleichzeitigen PS-Übergabeverfahren auftritt, das Senden (409), durch den eNodeB, einer Mobility From EUTRA Command-Nachricht an das UE und das Übertragen von Weiterleitungsinformationen einer Ziel-HRPD-Netzwerkzelle und Informationen eines 1xRTT-Netzwerks in die Mobility From EUTRA Command-Nachricht, um das UE aufzufordern, den PS-Dienst an die Ziel-HRPD-Netzwerkzelle weiterzuleiten und einen Telefondienst in einem aktuellen 1xRTT-Netzwerk fortzusetzen.

6. Eine Vorrichtung zur Durchführung eines leitungsvermittelten Rückfalls, wobei sich die Vorrichtung in einem Evolved Node B, eNodeB, befindet und Folgendes umfasst: eine Beurteilungseinheit und eine Fehlerverarbeitungseinheit, und wobei
die Beurteilungseinheit konfiguriert ist, um zu beurteilen, ob in einem Verfahren zu verbessertem leitungsvermittelten Rückfall, eCSFB, ein Verarbeitungsfehler auf einer Netzwerkseite auftritt oder nicht; und
die Fehlerverarbeitungseinheit konfiguriert ist, um eine Anzeigenachricht an ein UE zu senden, um das UE zur Weiterleitung an eine Zielzelle aufzufordern, wenn der Verarbeitungsfehler auf der Netzwerkseite auftritt;
wobei das eCSFB-Verfahren bedeutet, dass ein Long Term Evolution, LTE, Netzwerk das UE an ein 1 x Radio Telecommunication Technology, 1xRTT, Netzwerk weiterleitet, das einen Telefondienst unterstützt, wenn das UE den Telefondienst initialisiert;
wobei der Verarbeitungsfehler auf einer Netzwerkseite auftritt, einen Verarbeitungsfehler des 1xRTT-Netzwerks oder einen Verarbeitungsfehler eines MMEs im eCSFB-Verfahren oder einen Verarbeitungsfehler eines High Rate Packet Data, HRPD, Netzwerks oder des 1xRTT-Netzwerks oder des MMEs in einem gleichzeitigen paketvermittelten, PS, eCSFB-Übergabeverfahren des UEs umfasst.

7. Die Vorrichtung gemäß Anspruch 6, worin
die Fehlerverarbeitungseinheit konfiguriert ist, um: wenn ein Verarbeitungsfehler auf der Netzwerkseite in dem Prozess des Zurückfallens des UEs von einem Evolved Universal Terrestrial Radio Access Network, E-UTRAN, auf ein 1xRTT-Netzwerk auftritt, eine Radio Resource Control, RRC, Verbindungsabbaunachricht an das UE zu senden und Weiterleitungsinformationen einer Ziel-1xRTT-Netzwerkzelle in die RRC-Verbindungsabbaunachricht zu übertragen, um das UE aufzufordern, an die Ziel-lxRTT-Netzwerkzelle weiterzuleiten.

8. Die Vorrichtung gemäß Anspruch 6, worin
die Fehlerverarbeitungseinheit konfiguriert ist, um: wenn Verarbeitungsfehler auf der Netzwerkseite in dem Prozess des Zurückfallens des UEs von einem E-UTRAN auf ein 1xRTT-Netzwerk und einem gleichzeitigen PS-Übergabeprozess auftreten, eine RRC-Verbindungsabbaunachricht an das UE zu senden und Weiterleitungsinformationen einer Ziel-lxRTT-Netzwerkzelle und einer Ziel-HRPD-Netzwerkzelle in die RRC-Verbindungsabbaunachricht zu übertragen, um das UE aufzufordern, einen Telefondienst an die Ziel-lxRTT-Netzwerkzelle und einen PS-Dienst an die Ziel-HRPD-Netzwerkzelle weiterzuleiten.

9. Vorrichtung gemäß Anspruch 6, worin
die Fehlerverarbeitungseinheit konfiguriert ist, um: wenn ein Verarbeitungsfehler auf der Netzwerkseite in dem Prozess des Zurückfallens des UEs von einem E-UTRAN auf ein 1xRTT-Netzwerk auftritt, während kein Verarbeitungsfehler auf der Netzwerkseite in einem gleichzeitigen PS-Übergabeprozess auftritt, eine Mobility From EUTRA Command-Nachricht an das UE zu senden und eine Weiterleitungsinformation der Ziel-lxRTT-Netzwerkzelle und Informationen eines HRPD-Netzwerks in die Mobility From EUTRA Command-Nachricht zu übertragen, um das UE aufzufordern, einen Telefondienst an die Ziel-lxRTT-Netzwerkzelle weiterzuleiten und den PS-Dienst in einem aktuellen HRPD-Netzwerk fortzusetzen.

10. Vorrichtung gemäß Anspruch 6, worin
die Fehlerverarbeitungseinheit konfiguriert ist, um: wenn kein Verarbeitungsfehler auf der Netzwerkseite in dem Prozess des Zurückfallens des UEs von einem E-UTRAN auf ein 1xRTT-Netzwerk auftritt, während jedoch ein Verarbeitungsfehler auf einer Netzwerkseite in einem gleichzeitigen PS-Übergabeprozess auftritt, eine Mobility From EUTRA Command-Nachricht an das UE zu senden und eine Weiterleitungsinformation einer Ziel-HRPD-Netzwerkzelle und Informationen des 1xRTT-Netzwerks in die Mobility From EUTRA Command-Nachricht zu übertragen, um das UE aufzufordern, den PS-Dienst an die Ziel-HRPD-Netzwerkzelle weiterzuleiten und einen Telefondienst in einem aktuellen 1xRTT-Netzwerk fortzusetzen.

## Revendications

1. Procédé de mise en oeuvre d'un repli sur commutation de circuits, comprenant l'étape suivante :
dans un processus de repli sur commutation de circuits amélioré, eCSFB, un noeud B évolué, eNodeB, envoie un message d'indication à un équipement utilisateur, UE, pour indiquer à l'UE de se rediriger vers une cellule cible lorsque l'eNodeB apprend qu'un échec de traitement survient côté réseau ;
le processus eCSFB signifiant qu'un réseau d'évolution à long terme, LTE, replie l'UE sur un réseau à technologie de transmission radio 1x, 1xRTT, qui prend en charge un service vocal lorsque l'UE déclenche le service vocal ;
l'échec de traitement qui survient côté réseau comprenant un échec de traitement du réseau 1xRTT ou un échec de traitement d'une MME dans le processus eCSFB, ou un échec de traitement d'un réseau de données en mode paquet à haut débit, HRPD, ou du réseau 1xRTT ou de la MME dans un processus de transfert intercellulaire PS concomitant à l'eCSFB.

2. Procédé selon la revendication 1, dans lequel l'envoi d'un message d'indication à un UE pour indiquer à l'UE de se rediriger vers une cellule cible comprend l'étape suivante :
lorsque l'eNodeB apprend qu'un échec de traitement survient côté réseau dans un processus de repli de l'UE d'un réseau d'accès radio terrestre universel évolué, E-UTRAN, sur un réseau 1xRTT, l'eNodeB envoie (108) un message de libération de connexion de commande de ressources radio, RRC, à l'UE et inclut des informations de redirection d'une cellule de réseau 1xRTT cible dans le message de libération de connexion RRC pour indiquer à l'UE de se rediriger vers la cellule de réseau 1xRTT cible.

3. Procédé selon la revendication 1, dans lequel l'envoi d'un message d'indication à un UE pour indiquer à l'UE de se rediriger vers une cellule cible comprend l'étape suivante :
lorsque l'eNodeB apprend que des échecs de traitement surviennent côté réseau dans un processus de repli de l'UE d'un E-UTRAN sur un réseau 1xRTT et dans un processus de transfert intercellulaire en commutation de paquets, PS, concomitant, l'eNodeB envoie (209) un message de libération de connexion RRC à l'UE et inclut des informations de redirection d'une cellule de réseau 1xRTT cible et d'une cellule de réseau de données en mode paquet à haut débit, HRPD, cible dans le message de libération de connexion RRC pour indiquer à l'UE de rediriger un service vocal vers la cellule de réseau 1xRTT cible et le service PS vers la cellule de réseau HRPD cible.

4. Procédé selon la revendication 1, dans lequel l'envoi d'un message d'indication à un UE pour indiquer à l'UE de se rediriger vers une cellule cible comprend l'étape suivante :
lorsque l'eNodeB apprend qu'un échec de traitement survient côté réseau dans un processus de repli de l'UE d'un E-UTRAN sur un réseau 1xRTT tandis qu'aucun échec de traitement ne survient côté réseau dans un processus de transfert intercellulaire PS concomitant, l'eNodeB envoie (309) un message Mobility From EUTRA Command à l'UE et inclut des informations de redirection d'une cellule de réseau 1xRTT cible et des informations d'un réseau HRPD dans le message Mobility From EUTRA Command pour indiquer à l'UE de rediriger un service vocal vers la cellule de réseau 1xRTT cible et de continuer le service PS dans un réseau HRPD courant.

5. Procédé selon la revendication 1, dans lequel l'envoi d'un message d'indication à un UE pour indiquer à l'UE de se rediriger vers une cellule cible comprend l'étape suivante :
lorsque l'eNodeB apprend qu'aucun échec de traitement ne survient côté réseau dans un processus de repli de l'UE d'un E-UTRAN sur un réseau 1xRTT tandis qu'un échec de traitement survient côté réseau dans un processus de transfert intercellulaire PS concomitant, l'eNodeB envoie (409) un message Mobility From EUTRA Command à l'UE et inclut des informations de redirection d'une cellule de réseau HRPD cible et des informations d'un réseau 1xRTT dans le message Mobility From EUTRA Command pour indiquer à l'UE de rediriger le service PS vers la cellule de réseau HRPD cible et de continuer un service vocal dans un réseau 1xRTT courant.

6. Appareil destiné à mettre en oeuvre un repli sur commutation de circuits, l'appareil étant placé dans un noeud B évolué, eNodeB, et comprenant : une unité de jugement et une unité de traitement d'échec, dans lequel :
l'unité de jugement est configurée pour : juger si un échec de traitement survient ou non côté réseau dans un processus de repli sur commutation de circuits amélioré, eCSFB ; et
l'unité de traitement d'échec est configurée pour: envoyer un message d'indication à un UE pour indiquer à l'UE de se rediriger vers une cellule cible lorsque ledit échec de traitement survient côté réseau ;
le processus eCSFB signifiant qu'un réseau d'évolution à long terme, LTE, replie l'UE sur un réseau à technologie de transmission radio 1x, 1xRTT, qui prend en charge un service vocal lorsque l'UE déclenche le service vocal ;
l'échec de traitement qui survient côté réseau comprenant un échec de traitement du réseau 1xRTT ou un échec de traitement d'une MME dans le processus eCSFB, ou un échec de traitement d'un réseau de données en mode paquet à haut débit, HRPD, ou du réseau 1xRTT ou de la MME dans un processus de transfert intercellulaire en commutation de paquets, PS, concomitant à l'eCSFB.

7. Appareil selon la revendication 6, dans lequel :
l'unité de traitement d'échec est configurée pour : lorsqu'un échec de traitement survient côté réseau dans le processus de repli de l'UE d'un réseau d'accès radio terrestre universel évolué, E-UTRAN, sur un réseau 1xRTT, envoyer un message de libération de connexion de commande de ressources radio, RRC, à l'UE et inclure un message de redirection d'une cellule de réseau 1xRTT cible dans le message de libération de connexion RRC pour indiquer à l'UE de se rediriger vers la cellule de réseau 1xRTT cible.

8. Appareil selon la revendication 6, dans lequel :
l'unité de traitement d'échec est configurée pour: lorsque des échecs de traitement surviennent côté réseau dans un processus de repli de l'UE d'un E-UTRAN sur un réseau 1xRTT et dans un processus de transfert intercellulaire PS concomitant, envoyer un message de libération de connexion RRC à l'UE et inclure des informations de redirection d'une cellule de réseau 1xRTT cible et d'une cellule de réseau HRPD cible dans le message de libération de connexion RRC pour indiquer à l'UE de rediriger un service vocal vers la cellule de réseau 1xRTT cible et un service PS vers la cellule de réseau HRPD cible.

9. Appareil selon la revendication 6, dans lequel :
l'unité de traitement d'échec est configurée pour : lorsqu'un échec de traitement survient côté réseau dans un processus de repli de l'UE d'un E-UTRAN sur un réseau 1xRTT tandis qu'aucun échec de traitement ne survient côté réseau dans un processus de transfert intercellulaire PS concomitant, envoyer un message Mobility From EUTRA Command à l'UE et inclure des informations de redirection de la cellule de réseau 1xRTT cible et des informations d'un réseau HRPD dans le message Mobility From EUTRA Command pour indiquer à l'UE de rediriger un service vocal vers la cellule de réseau 1xRTT cible et de continuer le service PS dans un réseau HRPD courant.

10. Appareil selon la revendication 6, dans lequel :
l'unité de traitement d'échec est configurée pour : lorsqu'aucun échec de traitement ne survient côté réseau dans un processus de repli de l'UE d'un E-UTRAN sur un réseau 1xRTT tandis qu'un échec de traitement survient côté réseau dans un processus de transfert intercellulaire PS concomitant, envoyer un message Mobility From EUTRA Command à l'UE et inclure des informations de redirection d'une cellule de réseau HRPD cible et des informations du réseau 1xRTT dans le message Mobility From EUTRA Command pour indiquer à l'UE de rediriger le service PS vers la cellule de réseau HRPD cible et de continuer un service vocal dans un réseau 1xRTT courant.
